# EUROPÄISCHE PATENTSCHRIFT

(11) **EP 1 019 642 B1**
(45) Veröffentlichungstag und Bekanntmachung des Hinweises auf die Patenterteilung: **06.09.2006**
(21) Anmeldenummer: 99942803.0
(22) Anmeldetag: 29.07.1999
(51) Int. Cl.: F16D 3/41, F16D 3/38

(54) **GELENKANORDNUNG ZUR ÜBERTRAGUNG VON DREHMOMENTGEEIGNETEN GELENKWELLEN**
ARTICULATED ARRANGEMENT FOR ARTICULATED SHAFTS SUITABLE FOR TRANSMITTING TORQUE
ARTICULATION POUR JOINTS ARTICULES APPROPRIES A LA TRANSMISSION DE COUPLE

(30) Priorität: 30.07.1998 DE 29813550 U; 04.11.1998 DE 19850703
(43) Veröffentlichungstag der Anmeldung: 19.07.2000
(73) Patentinhaber: Voith Turbo GmbH & Co. KG, 89522 Heidenheim (DE)
(72) Erfinder: LINDENTHAL, Hans, D-89522 Heidenheim (DE)
(74) Vertreter: Dr. Weitzel & Partner
(86) Internationale Anmeldenummer: PCT/EP1999/005439
(87) Internationale Veröffentlichungsnummer: WO 2000/006919

(56) Entgegenhaltungen:
- DE-A- 19 601 290
- DE-C- 3 544 253
- DE-C- 4 033 753
- US-A- 2 026 997

## Beschreibung

Die Erfindung betrifft eine Gelenkanordnung für zur Übertragung von drehmomentgeeigneten Gelenkwellen, im einzelnen mit den Merkmalen aus dem Oberbegriff des Anspruchs 1.

Zapfenkreuzlageranordnungen für Gelenkanordnungen sind in verschiedenen Ausführungen beispielsweise aus den nachfolgend genannten Druckschriften bekannt:
1. DE 35 44 253 C1
2. DE 34 46 495 C2
3. SU 15 07 480 A1
4. DE 196 01 290 A1
5. DE 40 33 753

Die in der Druckschrift DE 196 01 290 A1 beschriebene Kreuzgelenkanordnung umfaßt ein Zapfenkreuz, zwei Gelenkgabeln zum Lagern der Zapfen des Zapfenkreuzes, wobei jeder Zapfen des Zapfenkreuzes mittels einer Lageranordnung, umfassend ein Radiallager mit einem Außenring und einem Innenring und ein Axiallager in einem, diesem zugeordneten Gabelauge der Gelenkgabel gelagert werden. Der Innenring des Radiallagers bildet wenigstens mittelbar eine Lauffläche des Axiallagers. Dem Innenring selbst ist ein erster in Einbaulage in axialer Richtung äußerer Bund zugeordnet, der zur Zapfenachse des in der Gelenkgabel gelagerten Zapfens hingerichtet ist und wenigstens mittelbar einen axialen Anschlag für den Sitz des Innenringes im stirnseitigen Bereich des Zapfens bildet. Der dem Innenring des Radiallagers zugeordnete erste äußere Bund ist kraft- und/oder formschlüssig mit dem in der Gelenkgabel gelagerten Zapfen verbindbar und/oder stützt sich auf dem in der Gelenkgabel gelagerten Zapfen zum Teil ab. Des weiteren ist dem Innenring in Einbaulage betrachtet in axialer Richtung ein zweiter weiterer innerer Bund zugeordnet, der sich radial von der Zapfenachse des in der Gelenkgabel gelagerten Zapfens weg erstreckt. Der innere Bund des Innenringes bildet wenigstens mittelbar die in axialer Richtung äußere Lauffläche des Axiallagers. Der Außenring des Radiallagers weist in Einbaulage in axialer Richtung einen ersten inneren Bund auf, der sich radial in Richtung der Zapfenachse des in der Gelenkgabel gelagerten Zapfens erstreckt. Der innere Bund des Außenringes des Radiallagers bildet wenigstens mittelbar die in axialer Richtung innere Lauffläche des Axiallagers. Der Außenring weist in Einbaulage in axialer Richtung einen weiteren zweiten äußeren Bund auf, dem ein Anschlag im Gabelauge zugeordnet ist. Dadurch wird eine im wesentlichen elastische Anbindung des Axiallagers, welches im Zapfenwurzelbereich angeordnet sein kann, erreicht. Des weiteren werden die in Richtung der Zapfenachse von der Gelenkachse weg gerichteten Axialkräfte an der Gelenkgabelhälfte abgestützt, die der in Kraftrichtung liegenden Gelenkgabelhälfte gegenüberliegen. Das in Wirkungsrichtung der Axialkraft liegende Axiallager ist dann immer entlastet. Die Axialkräfte werden somit als Druckkraft in die Gelenkgabel eingeleitet. Dabei können die Rohlinge für die Lagerringe des Radiallagers dünnwandiger gestaltet werden, was sich in einer Verringerung des Gewichtes niederschlägt. Am Außenring sind keine Gewindebohrungen mehr erforderlich. Dies führt zu einer höheren Festigkeit und ist kostengünstiger. In der Regel ist der dem Innenring des Radiallagers zugeordnete äußere Bund von einem separaten Bauteil gebildet. Dieses separate Bauteil ist deckelförmig ausgestaltet und mittels wenigstens einer Schraubverbindung mit dem in der Gelenkgabel gelagerten Zapfen verbindbar. Da das separate Bauteil mit einem Teil seiner in Einbaulage der Gelenkachse zugewandten Stirnfläche wenigstens mittelbar einen Anschlag für wenigstens einen in axialer Richtung äußerer Stirnfläche des Innenringes des Radiallagers bildet, ist dieses deckelförmig gestaltete Bauteil stufenförmig ausgeführt und nimmt an der Einleitung der Axialkräfte über die Gabel in das Radial-/Axiallager teil.

Die US 2,026,997 offenbart eine Ausführung einer Gelenkwelle, bei welchen die Fixierung zwischen den die Lagerung abstützenden Elementen, insbesondere dem Zapfen und der Gelenkgabel mittels einer Pressverbindung erfolgt. Diese Lösung gestaltet sich jedoch sehr aufwendig, da hier die Mittel zur Verspannung sich durch das gesamte Zapfenkreuz erstrecken.

Ferner wird die Pressverbindung aufgrund der Gestaltung miteinander zu koppelnden Elemente realisiert, wobei die geometrische Auslegung der miteinander zu verbindenden Elemente dabei in Abhängigkeit der zu erzielenden Presswirkung erfolgen muss. Ferner ist eine schnelle Lösung der Pressverbindung nicht möglich.

Der Erfindung liegt die Aufgabe zugrunde, eine Lageranordnung der oben beschriebenen Art derart weiterzuentwickeln, daß die Abstützung der Axialkräfte und Radialkräfte in noch zufriedenstellender Art und Weise erfolgen kann.

Der konstruktive Aufwand ist dabei möglichst gering zu halten, wobei auch auf eine leichte und einfache Bereitstellung und Aufhebung der Lagerzuordnung der einzelnen Elemente abgestellt werden soll.

Die erfindungsgemäße Lösung der Aufgabe ist durch die Merkmale des Anspruchs 1 charakterisiert. Vorteilhafte Ausgestaltungen sind in den Unteransprüchen wiedergegeben.

Erfindungsgemäß ist vorgesehen, daß einer Gelenkanordnung zur Übertragung von Drehmoment mit wenigstens einer Gelenkgabel, mit in den Gabelaugen der Gelenkgabeln gelagerten Zapfen sowie einer Lageranordnung für jeden Zapfen, welche wenigstens ein Radiallager umfaßt und jeder Lageranordnung ein in wenigstens zwei Teilbereiche unterschiedlicher Abmessungen unterteilbares deckelförmiges Element zugeordnet ist, welches im Bereich wenigstens eines Teilbereiches einen axialen Anschlag für den Sitz des Innenringes des Radiallagers bildet, Mittel zugeordnet werden, welche das deckelförmige Element wenigstens über einen Teilbereich des anderen zweiten Bereiches gegenüber dem Zapfen verspannen. Das deckelförmige Element übernimmt dabei mehrere Funktionen, zum einen die Abstützung der Axialkräfte sowie die Abstützung von Radialkräften. Die Verspannung dient zur axialen Anbindung der Stufenscheibe an das Zapfenkreuz. Relativbewegungen der einzelnen Elemente der Lageranordnungen während der Kraftübertragung werden somit weiter reduziert.

Die Mittel zum Verspannen des deckelförmigen Elementes gegenüber dem Zapfen können als Preßverbindung ausgeführt werden. Für die Realisierung der Preßverbindung bestehen eine Vielzahl von Möglichkeiten:
- Vorsehen einer Preßpressung zwischen wenigstens einem Teil des zweiten Teilbereiches des deckelförmigen Elementes und der Zapfenbohrung
- Vorsehen eines Mittels zur Aufweitung wenigstens eines Teiles des zweiten Teilbereiches des deckelförmigen Elementes gegenüber der Zapfenbohrung
- Vorsehen eines Ölpreßverbandes zwischen wenigstens einem Teil des zweiten Teilbereiches des deckelförmigen Elementes und dem Zapfen
- Ausführung der Preßverbindung als Querpreßverbindung

Die konkrete Ausgestaltung und Auswahl der Möglichkeit der Realisierung der Verspannung zwischen Deckelscheibe und Zapfenkreuz in axialer und radialer Richtung erfolgt in Abhängigkeit der konkreten Verhältnisse des Einsatzfalles und liegt im Ermessen des Fachmannes.

Bei Ausführungen zur Realisierung einer Verspannung zwischen dem deckelförmigen Element und dem Zapfenkreuz mittels eines konischen Bolzens, welcher zur Aufweitung in den deckelförmigen Körper eingetrieben werden kann, ist vorzugsweise eine Verdrehsicherung für das bolzenförmige Element vorgesehen, um unter Belastung eine Entlastung der Verspannung zwischen deckelförmigem Element und Zapfenkreuz zu vermeiden. Vorzugsweise ist diese Bolzenverdrehsicherung in Form eines bügelförmigen Elementes ausgeführt, welches am Bolzenkopf angreift und an den Schraubverbindungen zur Befestigung des deckelförmigen Elementes am Zapfenkreuz gesichert ist. Andere Möglichkeiten sind ebenfalls denkbar.

Die erfindungsgemäße Lösung ist nachfolgend anhand von Figuren erläutert. In diesen ist im einzelnen folgendes dargestellt:
- Fig. 1: verdeutlicht schematisch eine erfindungsgemäße Ausführung einer Gelenkanordnung, insbesondere einer Kreuzgelenkanordnung in Einbaulage in einer Schnittdarstellung durch ein Kreuzgelenk;
- Fig. 2: verdeutlicht eine weitere Möglichkeit zur Realisierung der Verspannung zwischen dem deckelförmigen Element und dem Zapfen für eine Ausführung entsprechend Fig. 1;
- Fig. 3: verdeutlicht eine weitere Ausführung eines deckelförmigen Elementes mit konischer Gestaltung;
- Figuren 4 bis 6: verdeutlichen weitere Ausführungen des deckelförmigen Elementes.

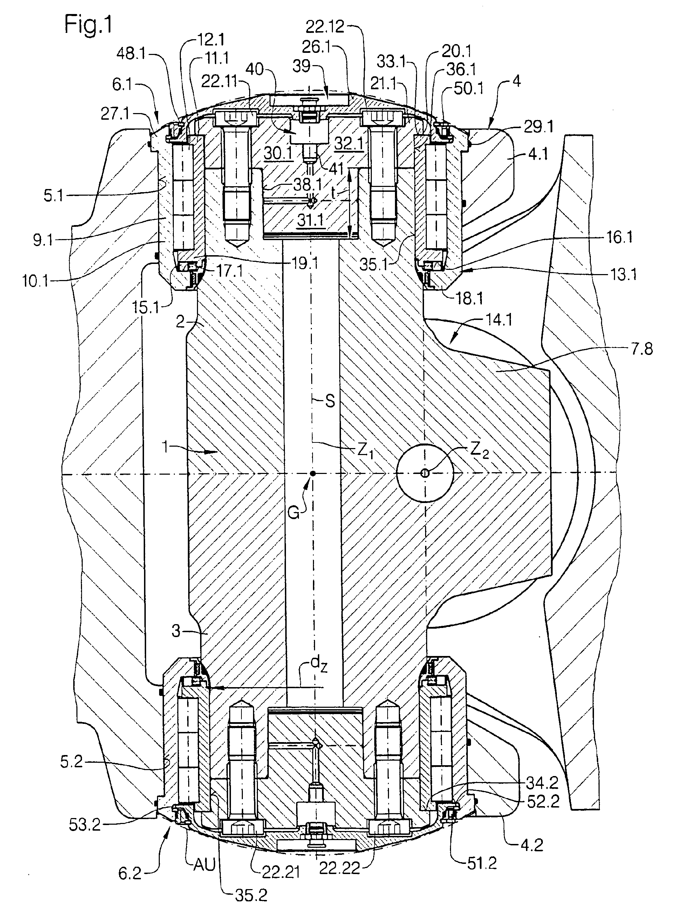

Die Figur 1 verdeutlicht schematisch eine erfindungsgemäße Ausführung einer Gelenkanordnung, insbesondere einer Kreuzgelenkanordnung in Einbaulage in einer Schnittdarstellung durch ein Kreuzgelenk in einer durch die Zapfenachse gelegten und senkrecht zur Gelenkachse stehende Ebene in einer Ansicht auf einen in der Gelenkgabel gelagerten Zapfen eines Zapfenkreuzes. In dieser Figur sind zur Veranschaulichung im Schnitt in einer Gelenkgabel gelagerte Zapfen und ein dritter, um 90° versetzt zu den beiden Zapfen angeordneter, und in der anderen Gelenkgabel gelagerter Zapfen dargestellt, wobei jedoch aus Vereinfachungsgründen die Lagerung für die in einer Gelenkgabel gelagerten Zapfen verdeutlicht wird. In den anderen Figuren, welche weitere Ausführungsmöglichkeiten darstellen, wird aus Vereinfachungsgründen jeweils nur ein Ausschnitt einer Gelenkgabel dargestellt. Für gleiche Elemente werden die gleichen Bezugszeichen verwendet.

Ein Zapfenkreuz 1 ist mit seinen Zapfen 2 und 3 in einer Gelenkgabel 4, umfassend zwei Gelenkgabelhälften - einer ersten Gelenkgabelhälfte 4.1 und einer zweiten Gelenkgabelhälfte 4.2, im Bereich deren Lagerbohrungen 5, hier 5.1 mittels jeweils einer Lageranordnung 6, hier 6.1, gelagert. Die zu den in der Gelenkgabel 4 gelagerten Zapfen 2 und 3 um 90 Grad versetzt angeordneten Zapfen 7 und 8 des Zapfenkreuzes 1 sind in einer weiteren, hier im Einzelnen nicht dargestellten Gelenkgabel, umfassend ebenfalls zwei Gelenkgabelhälften, im Bereich von deren Lagerbohrungen mittels jeweils einer Lageranordnung gelagert. Die Gelenkgabel 4 ist dabei beispielsweise mit einem, hier nicht dargestellten Maschinenteil der Antriebsseite und die hier nicht im einzelnen dargestellte Gelenkgabel für die Zapfen 7 und 8 mit einem Maschinenteil der Abtriebsseite gekoppelt. Die Zapfenachsen Z1 und Z2 des Zapfenkreuzes 1, unter denen die Achsen durch die Zapfen 2 und 3 beziehungsweise 7 und 8 verstanden werden, können dabei wie dargestellt in einer Ebene oder in zwei zueinander parallel verlaufenden und zu einander versetzten Ebenen angeordnet werden. Die Lageranordnung 6.1 des Zapfen 2 umfaßt ein Radiallager 9.1 mit einem Außenring 10.1, den Wälzelementen 12.1 und einem als Lagerbuchse ausgeführten Innenring 11.1. Desweiteren ist ein Axiallager 13.1 vorgesehen, das im dargestellten Fall vorzugsweise im Bereich der Zapfenwurzel, hier der Zapfenwurzel 14.1 angeordnet ist.

Das Axiallager 13.1 umfaßt wenigstens die Wälzelemente 15.1. Die Wälzelemente 15.1 stützten sich an einer zur Gelenkachse G, unter welcher die Achse durch den Schnittpunkt der in eine Ebene projizierten Zapfenachsen Z1 und Z2 zu verstehen ist, gerichteten Stirnfläche 16.1 des Innenringes 11.1 des Radiallagers 9.1 und an einer von der Gelenkachse G weggerichteten Stirnfläche 17.1 des Außenringes 10.1 des Radiallagers 9.1 ab. Diese Stirnflächen 16.1 und 17.1 werden von den den Laufringen des Radiallagers 9.1 zugeordneten Bunden gebildet und übernehmen hier die Funktion der Außen- und Innenringe des Axiallagers. Der Außenring 10.1 des Radiallagers 9.1 weist dazu einen gegen die Zapfenachse Z1 gerichteten ersten inneren Bund 18.1 auf. Der Innenring 11.1 des Radiallagers 9.1 bildet mit einem Bund 19.1, welcher als innerer Bund bezeichnet wird, eine bauliche Einheit. Es besteht jedoch auch die hier nicht dargestellte Möglichkeit, das Axiallager 13.1 mit zusätzlichen Laufringen (Außen- und Innenring) zu versehen, die sich dann an den Stirnflächen 16.1 beziehungsweise 17.1 der Bunde 18.1 und 19.1 abstützen. Die Bunde 18.1 und 19.1 sind in Einbaulage betrachtet in axialer Richtung ausgehend von der Gelenkachse G innenliegend angeordnet, vorzugsweise im Bereich der Zapfenwurzel 14.1. Beide Laufringe - Außenring 10.1 und Innenring 11.1 des Radiallagers 9.1 weisen jedoch auch im Bereich deren äußeren Enden in Einbaulage in axialer Richtung betrachtet ausgehend von der Gelenkgabelachse G jeweils einen weiteren zweiten Bund auf. Dem Innenring 11.1 ist ein äußerer Bund 20.1, hier in Form eines am Laufring ausgebildeten ringförmigen Vorsprunges oder in Form eines separaten Bauteiles in Form einer deckelförmig ausgestalteten Scheibe 21 zugeordnet. Die deckelförmig gestaltete Scheibe 21.1 ist mittels Schraubverbindungen 22.11 und 22.12 mit dem Zapfen 2 verbunden. Eine derartige Ausführung ermöglicht die Realisierung eines Anschlages für den Innenring 11.1 des Radiallagers 9.1 in axialer Richtung. Der Innenring 11.1, der als Lagerbuchse ausgeführt sein kann, ist auf dem Zapfen 2 aufgepreßt.

Der Außenring 10.1 des Radiallagers 9.1 ist mit einem jeder Lagerbohrung 5.1 zugeordneten Lagerdeckel 26.1 gekoppelt. Der Lagerdeckel 26.1 nimmt dabei nicht an der Kraftübertragung teil. Die formschlüssige Verbindung wird im Bereich eines zweiten äußeren Bundes 27.1 des Außenringes 10.1 des Radiallagers realisiert. Der Bund 27.1 erstreckt sich dabei in radialer Richtung von der Zapfenachse Z1 weg und ist in axialer Richtung nach außen, das heißt in Richtung parallel zur Zapfenachse Z1 verlängert ausgeführt. Die formschlüssige Verbindung zwischen dem Außenring 10.1 und dem Lagerdeckel 26.1 kann verschiedenartig ausgeführt werden.

Der Außenring 10.1 des Radiallagers 9.1 ist entlang der Zapfenachse Z1 in Richtung der Gelenkachse G bis zu einem Anschlag 29.1, welcher in der Gelenkgabel 4.1, insbesondere im Gabelauge beziehungsweise der Lagerbohrung 5.1 eingearbeitet ist, einschiebbar. Diese Anschlagsfunktion wird, wie in der Figur 1 dargestellt, vorzugsweise mittels dem Bund 27.1 am Außenring 10.1 des Radiallagers 9.1 realisiert, der dadurch an der Gelenkgabel 4.1 zum Anliegen kommt.

Zum Abstützen der Radialkräfte ist ein deckelförmiges Element 21.1 vorgesehen. Dieses weist wenigstens zwei Teilbereiche unterschiedlicher Abmessungen auf, einen ersten Teilbereich 30.1 und einem zweiten Teilbereich 31.1. Im dargestellten Fall ist ein weiterer dritter Teilbereich 32.2 vorgesehen. Der dritte Teilbereich 32.1 bildet dabei den äußeren Bund 20.1 für den Innenring 10.1 des Radiallagers 9.1. Der Innenring 10.1 des Radiallagers 9.1 stützt sich dabei mit seiner von der Gelenkachse G weggerichteten Fläche 33.1 an der vom dritten Teilbereich 32.1 gebildeten Anschlagfläche 34.1 in axialer Richtung ab. Desweiteren stützt sich die in radialer Richtung innere Fläche 35.1 des Innenringes 10.1 des Radiallagers 9.1 an der Außenfläche 36.1 im zweiten Teilbereich 31.1 des deckelförmigen Elementes 21.1 ab. Der zweite Teilbereich 31.1 des deckelförmigen Elementes 21.1 weist dazu einen Durchmesser d_{DE2} auf, welcher dem Durchmesser des Zapfens d_{z} entspricht. Der erste Bereich des deckelförmigen Elementes 21.1 erstreckt sich über wenigstens einen Teil der Tiefe t einer Zapfenbohrung 38.1. Wenigstens ein Teil des ersten Teilbereiches 30.1 des deckelförmigen Elementes 21.1 wird gegenüber der Zapfenbohrung 38.1 beziehungsweise des Zapfens 2 verspannt. Die Verspannung erfolgt im dargestellten Fall über einen sogenannten Ölpressverband. Zur Realisierung des Ölpressverbandes sind entsprechende Mittel 39 vorgesehen. Diese umfassen wenigstens ein Betriebsmittelzufuhrsystem 40. Das Betriebsmittelzufuhrsystem 40 umfaßt wiederum im dargestellten Fall wenigstens einen zentralen Versorgungskanal 41, welcher in entsprechende Verteilkanäle 42 mündet. Diese zentrale Versorgungskanal 41 ist im dargestellten Fall vorzugsweise im Bereich der geometrischen Symmetrielinie S des Zapfens 2 und damit der Zapfenachse Z1 angeordnet, und erstreckt sich durch den Lagerdeckel 26.1 und das deckelförmige Element 21.1. Die Radialkräfte werden dabei von der Gelenkgabel 4.1 über den Außenring 10.1 des Radiallagers 9.1, die Wälzelemente 12.1 auf den Innenring 11.1 des Radiallagers 9.1 und von diesem über das deckelförmige Element 21, hier insbesondere die Anschlagfläche am Außenumfang 36.1 im zweiten Bereich 31.1 des deckelförmigen Elementes 21.1 auf die Zapfenbohrung 38 und damit dem Zapfen 2 übertragen. Der Ölpressverband zwischen dem Zapfen 2 und dem deckelförmigen Element 21 dient hier nicht wie üblich als Verbindung zweier Bauelemente zum Zwecke der Übertragung von Drehmoment, sondern zusätzlich zu den Schraubverbindungen 22.11, 22.12 der axialen Anbindung des deckelförmigen Elementes 21.1 an den Zapfen 2.

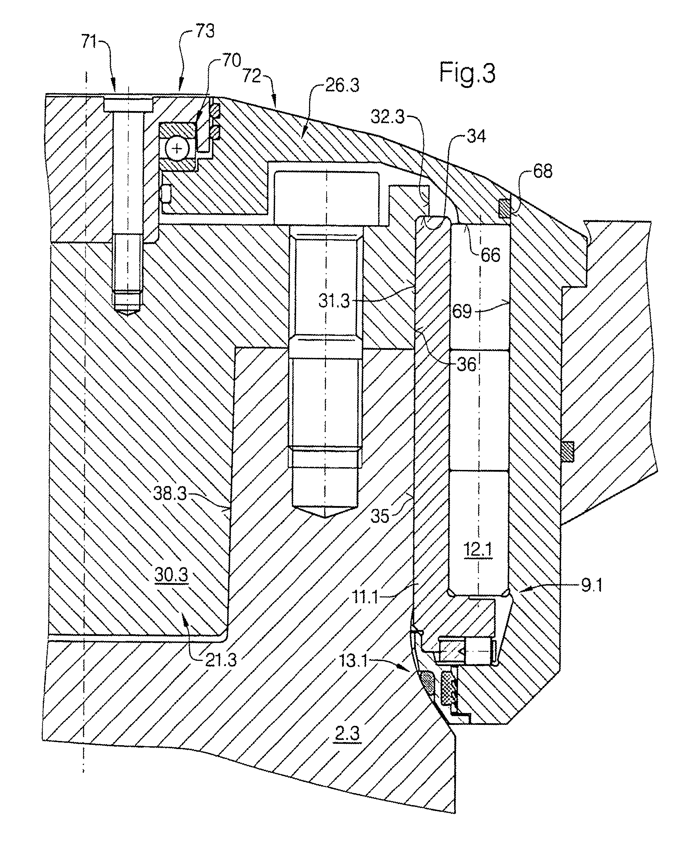

Im dargestellten Ausführungsbeispiel sind das deckelförmige Element 21 und der Wälzlagerinnenring 10.1 von verschiedenen Bauteilen gebildet. Das deckelförmige Element 21 ist als Stufenscheibe in Form eines einzigen Bauteils ausgeführt, kann aber auch mehrteilig sein. Weitere mögliche Ausführungen sind in den Figuren 3 bis 6 dargestellt. Die durch die Querbeschleunigung entstehenden Axialkräfte, die in Richtung der Zapfenachse Z1 von der Gelenkachse G weg, hier in Richtung der Gelenkgabelhälfte 4.2 wirken, führen zu einer Entlastung des in dieser Richtung liegenden Axiallagers und zu einer Belastung des in Zapfenachsrichtung entgegen der Wirkungsrichtung der Axialkräfte auf der Seite der Gelenkgabelhälfte 4.1 liegenden Axiallagers 13.1. Das entlastete Lager kann in diesem Betriebszustand als passives Lager und das belastete als aktives Lager bezeichnet werden. In dieser Ausführung bewirkt eine in Richtung der Zapfenachse Z1 von der Gelenkachse G weg wirkende Axialkraft ein Aufheben der an den Schraubverbindungen 22.21, 22.22 in dieser Richtung wirkenden Zugkräfte und damit eine axiale Verschiebung des entsprechenden Bundes des Radiallagers, wodurch das Axiallager des in der Gelenkgabel 4.2 gelagerten Zapfens entlastet wird. Es erfolgt keine Kraftübertragung über dieses Axiallager. Gleichzeitig werden die Schrauben der Schraubverbindung 22.11 und 22.12 an der gegenüberliegenden Gelenkgabelhälfte 4.1 mehr auf Zug beansprucht. Es erfolgt eine Addition der in der Schraubverbindung 22.11, 22.12 vorherrschenden Zugkraft und der am Zapfen 2 wirkenden Zugkraft, die zu einer Druckbeanspruchung des Bundes 20.1, welcher vom dritten Teilbereich 32.1 des deckelförmigen Elementes 21.1 gebildet wird und damit des Innenringes 11.1 führt. Die Axialkraft stützt sich somit über den auf Druck beanspruchten äußeren Bund 20.1, den Innenring 11.1, das Axiallager 13.1, den inneren Bund 19.1 über den Außenring 10.1 des Radiallagers 9.1 auf die Gelenkgabelhälfte 4.1, insbesondere die Ausnehmung 45 ab.

Da die Verformung der drehmomentübertragenden Bauteile eines Kreuzzapfengelenkes in Umfangsrichtung der Kraft so extrem sein kann, daß es aufgrund der Lagerung zu einer ungleichmäßigen Lastverteilung kommen kann, und nur ein Bruchteil der möglichen Tragzahl genutzt werden kann. Die fehlende Planparallelität der Axiallagerlaufbahnen 18.1 und 19.1 bewirkt eine vorzeitige Ermüdung der Laufbahnen und Wälzkörper und/oder plastische Verformungen mit ihren Folgen. Andererseits werden die zugesicherten dynamischen und statischen Tragzahlen der Lager durch die Lagerhersteller nur in einer steifen Lageranschlußkonstruktion garantiert. Um eine Planparallelität der Laufbahnen des Axiallagers bei zusätzlich wirkender Umfangskraft zu gewährleisten sind in der Lösung die Axiallager 13.1 derart angeordnet, daß die Verformung an den beiden Bundelementen 18.1 und 19.1 in gleicher Weise erfolgt. Dies wird dadurch erreicht, daß die möglichen Hebelarme, welchen das Axiallager 13.1 beziehungsweise dessen Laufflächen ausgesetzt sind, möglichst gering gehalten werden. Vorzugsweise sind beide Bunde derart ausgelegt, daß möglichst gleiche Hebelarme vorhanden sind. In diesem Fall wird die Parallelität der Laufflächen des Axiallagers 13.1 bei Belastung erhalten.

Zur Abschirmung des Radiallagers 9.1 ist zwischen dem Lagerdeckel 26.1 und dem äußeren Bund 27.1 des Außenringes 10.1 des Radiallagers 9.1 ein Dichtungsträger 50.1 in Form eines Ringes oder einer Scheibe vorgesehen ist, der in axialer Richtung mittels Sicherungselementen, beispielsweise Sicherungsringen 48.1 fixiert ist und formschlüssig mit dem Lagerdeckel 26 verbunden ist. Um während der elastischen Verformung der Lagerbohrung 5.1 der Gelenkgabel 4.1 unter Drehmomentenbelastung eine Beanspruchung des Lagerdeckels 26.1 in radialer Richtung zu minimieren und eine formschlüssige Verbindung 25.1 mit dem Außenring 10.1 des Radiallagers 9.1 zu realisieren, weist der Lagerdeckel 26.1 im Bereich seines äußeren Umfanges AU einen Deckelrand 51.1 auf, der in Einbaulage in radialer Richtung sich über einen Teil der Breite des Radiallagers 9.1 erstreckt, vorzugsweise so daß dieser Teil des äußeren Umfanges AU des Lagerdeckels 26 das Radiallager 9.1, insbesondere die Wälzelemente 12.1 in axialer Richtung abschirmt. In Einbaulage liegt der Deckelrand 51.1 mit einem Teil seiner der Gelenkachse G zugewandten Innenfläche 52.1 auf einer Teilfläche 53.1 einer dafür vorgesehenen Aussparung 54.1 am äußeren Bund 27.1 des Außenringes 10.1 des Radiallagers 9.1 auf. Der Deckelrand ist in Einbaulage in radialer Richtung elastisch verformbar gestaltet. Der Sicherungsring 48.1 ist dann zwischen den Deckelrand 51.1 des Lagerdeckels 26 und dem Bund 27.1 und dem Dichtungsträger 50.1 angeordnet. Zur Anpassung des Lagerdeckels an die Verformungen der Lagerbohrungen ist dieser derart formschlüssig mit dem äußeren Bund des Außenringes des Radiallagers gekoppelt, daß Ausweichmöglichkeiten bei Vorliegen elastischer Verformungen des Deckelrandes möglich sind.

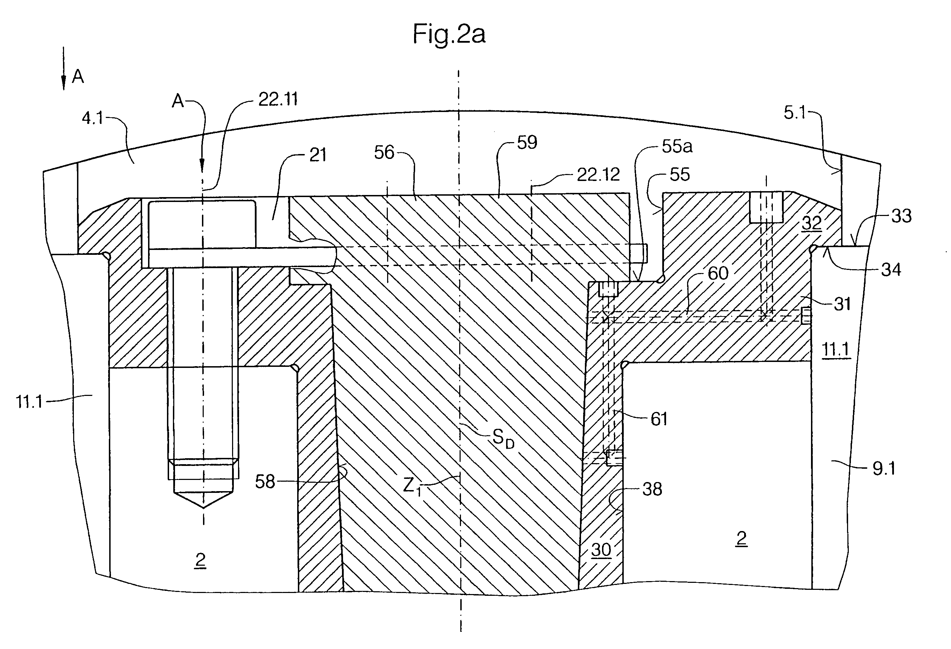

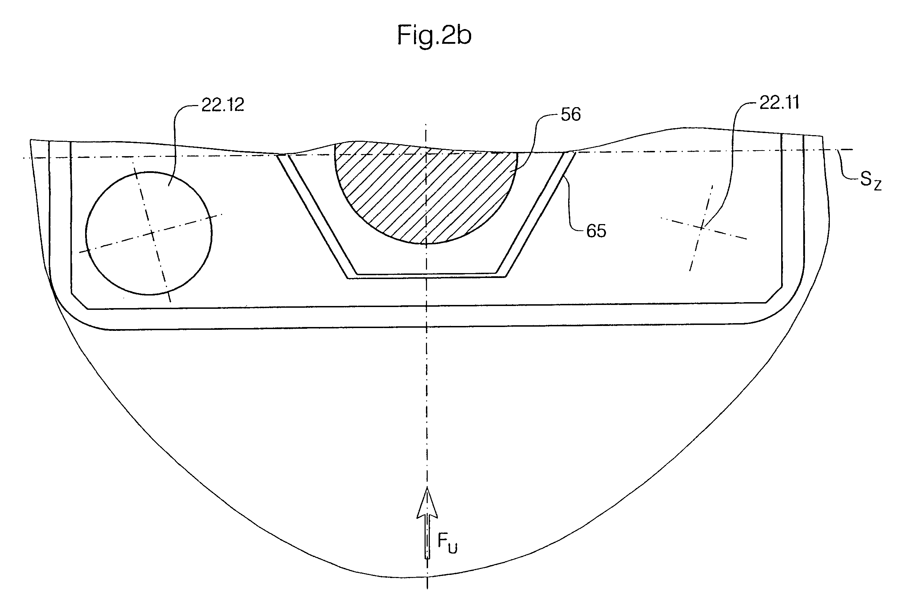

Die Figur 2 verdeutlicht anhand eines Ausschnittes aus einer Zapfenlagerung in stark vereinfachter Darstellung eine weitere Möglichkeit zur Realisierung der Verspannung zwischen einem deckelförmigen Element 21 und dem Zapfen 2 für eine Ausführung entsprechend der Figur 1. Für gleiche Elemente werden daher die gleichen Bezugszeichen verwendet. Die Figur 2a verdeutlicht dabei einen Ausschnitt aus einer Ansicht entsprechend der Figur 1. In dieser ist der Zapfen 2 sowie das deckelförmige Element 21 erkennbar. Das deckelförmige Element 21 ist auch hier in Form einer Stufenscheibe ausgeführt und weist wenigstens die drei Teilbereiche - einen ersten Teilbereich 30 und einen zweiten Teilbereich 31 und einen dritten Teilbereich 32 auf. Der dritte Teilbereich 32 bildet dabei mit seiner zur Gelenkachse G hingerichteten Fläche 34 einen Anschlag für die Fläche 33 am Innenring 11.1 des Radiallagers 9.1. Der erste Teil 30 erstreckt sich dabei in die Zapfenbohrung 38 hinein. Im Bereich des zweiten Teilbereiches 31 beziehungsweise wenigstens im Bereich des dritten Teilbereiches 32 ist im Bereich der Symmetrieachse S_{d} des deckelförmigen Elementes 21, welche in Einbaulage mit der Zapfenachse Z1 zusammenfällt, eine Aussparung 55 vorgesehen. Die Verspannung des deckelförmigen Elementes 21 gegenüber der Zapfenbohrung 38 erfolgt hier durch entsprechende Mittel, welche ein Aufweiten des deckelförmigen Elementes im ersten Teilbereich 30 ermöglichen. Im dargestellten Fall wird dazu ein konischer Bolzen 56 verwendet. Dieser erstreckt sich in Einbaulage in Richtung der Gelenkgabelachse G durch das deckelförmige Element 21 bis in den Zapfen 2 hinein. Das deckelförmige Element 21 ist wenigstens über einen Teil seines ersten Bereiches 30 derart gestaltet, daß diese und die Zapfenbohrung 38 in diesem Bereich eine Übergangspassung bilden. Für den Bolzen 56 zur Aufweitung weist das deckelförmige Element 21 wenigstens eine Durchgangsbohrung 58 auf. Diese erstreckt sich wenigstens über den ersten und zweiten Bereich und ist im dritten Bereich zur Bildung der Aussparung 55 hin vergrößert. Die Aussparung 55 bildet dabei eine Anschlagfläche 55.a für den Kopf 59 des Bolzens 56. Die Verspannung des deckelförmigen Elementes 21 wird durch das Einführen des Bolzens 56 in die zylindrische Bohrung 58 realisiert, wobei der Durchmesser der zylindrischen Bohrung 58 wenigstens dem kleinsten Durchmesser des konisch gestalteten Bolzens 56 entspricht.

Auch bei dieser Ausführung sind Betriebsmittelversorgungskanäle, hier Druckölkanäle 60 und 61 vorgesehen.

Die Figur 2b verdeutlicht einen Ausschnitt aus einer Ansicht A entsprechend der Figur 2a. Aus dieser ist ersichtlich, daß der Bolzen 56 mit einer Bolzenverdrehsicherung 65 versehen ist. Diese ist in Form eines blechartigen Elementes ausgeführt, welches den Bolzenkopf 56 sowie die Schraubeiemente 22.11 und 22.12 umschließt. Zur Axialkraftaufnahme stehen daher relativ große Querschnitte zur Verfügung, insbesondere der Bolzenquerschnitt sowie die Querschnitte der Schraubverbindungen. Die Schraubverbindungen sind dabei entsprechend der Ansicht A auf die Figur 2a im wesentlichen im Bereich der Symmetrielinie S_{z} des Zapfens 2 angeordnet. Der hoch beanspruchte Bereich des Zapfens ist frei von Verschraubungen.

Die Figur 3 verdeutlicht anhand eines Ausschnittes aus einer Lagerung eine weitere Ausführung eines deckelförmigen Elementes 21, hier mit 21.3 bezeichnet, wie es für Ausführungen entsprechend der Figur 1 a und der Figur 2a zum Einsatz gelangen kann. Für gleiche Elemente entsprechend den Ausführungen der anderen Figuren 1 und 2 werden daher die gleichen Bezugszeichen verwendet. Das deckelförmige Element 21.3 umfaßt hier ebenfalls drei Teilbereiche, einen ersten Teilbereich 30.3, einen zweiten Teilbereich 31.3 und einen dritten Teilbereich 32.3. Der dritte Teilbereich 32.3 dient dabei als axialer Anschlag für den Innenring 11.1 des Radiallagers 9.1. In radialer Richtung bildet die Außenfläche 36 im zweiten Teilbereich 31.3 eine Anschlagfläche für die Innenfläche 35 des Innenrings 11.1 des Radiallagers 9.1. Wenigstens der erste und der zweite Bereich sind in Form einer Stufenscheibe ausgeführt, während der dritte Bereich 32.3 als sich in axialer und radialer Richtung erstreckender Bund ausgeführt ist.

Die Verspannung zwischen dem deckelförmigen Element 21.3 und der Zapfenbohrung 38.3 des Zapfens 2 kann verschiedenartig ausgeführt sein, beispielsweise wie in den Figuren 1 a und 1 b dargestellt. Daher wird auf diese Möglichkeiten hier im Einzelnen nicht mehr eingegangen. Der erste Bereich 30.3 des deckelförmigen Elementes 21.3 ist im dargestellten Fall konisch gestaltet. Dies bedeutet, daß der Durchmesser in Richtung der Gelenkachse G im ersten Bereich 30.3 abnimmt.

In der Figur 3 ist neben der kraftschlüssigen Verspannung zwischen deckelförmigem Element 21.3 und Zapfenkreuz 2.3 eine weitere Möglichkeit der Gestaltung des Lagerdeckels 26.3 dargestellt. Dieser bildet einen Anschlag für die Wälzkörper 12.1 des Radiallagers 9.1. Dazu ist seine in Richtung der Gelenkgabelachse G weisende Fläche 66 in entsprechender Weise oberflächenbehandelt, so daß an diesem die Außenflächen 67 der Wälzkörper 12.1 entlang gleiten können. Der Außenumfang des Lagerdeckels 26.3, hier mit 68 bezeichnet, bildet eine Anschlagfläche, welche mit der in axialer Richtung verlängerten Ausführung der Lauffläche 69 am Außenring 11.1 des Radiallagers 9.1 in Berührung steht. Der Lagerdeckel 26.3 ist kraftschlüssig über die Schraubverbindungen 71 mit dem deckelförmigen Element 21.3 gekoppelt. Der Lagerdeckel 26.3 umfaßt wenigstens zwei Einzelelemente, ein erstes Einzelelement 72 und ein zweites Einzelelement 73, welche über eine Lageranordnung 70 miteinander gekoppelt sind. Diese Lageranordnung ist als Festlageranordnung ausgeführt, so daß sowohl radiale - als auch axiale Kräfte, bezogen auf die Einbaulage des Lagers und die Anordnung der Laufringe übertragen werden können.

Auf diese Ausführung stellt eine einfache und sehr kompakte Lageranordnung für eine Gelenkanordnung dar.

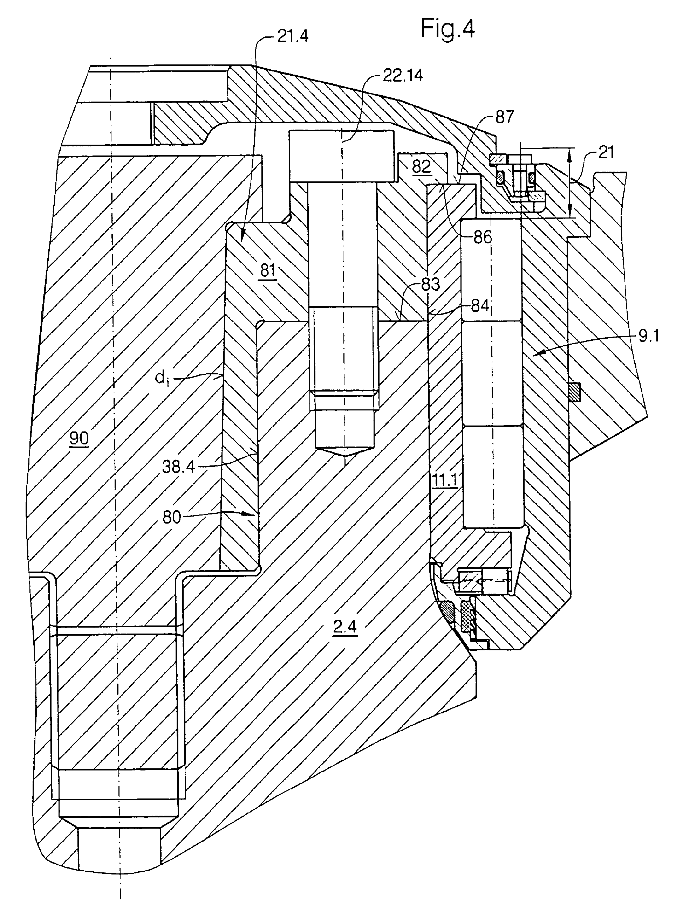

Die Figuren 4 bis 6 verdeutlichen weitere Ausführungen der Realisierung der Verspannung zwischen dem deckelförmigen Element und dem Zapfen zwei, wobei die Lagerungen des Lagerdeckels den in den Figuren 1 bis 3 entsprechen, lediglich die Ausführung des deckelförmigen Elementes unterscheidet sich. Das deckelförmige Element 21.4 umfaßt im dargestellten Beispiel drei zylindrische Bereiche, die zu einem Bauteil zusammengefaßt sind. Die drei Bereiche, hier ein erster Bereich 80, ein zweiter Bereich 81 und ein dritter Bereich 82 weisen jeweils in radialer Richtung unterschiedliche Wandstärken auf. Der erste Teilbereich streckt sich dabei im wesentlichen von der Stirnfläche 83 des Zapfens über eine gewisse Distanz in eine Zapfenbohrung 38.4 hinein. Der zweite Bereich bildet mit seinem Außenumfang 84 eine Anschlagfläche für den Innenring 11.1 des Radiallagers 9.1. Der dritte Bereich 82 bildet in axialer Richtung mit seiner zur Gelenkgabelachse G hin gerichteten Stirnfläche 86 einen Anschlag für die von der Gelenkgabelachse G weggerichtete Stirnfläche 87 des Innenringes 11.1 des Radiallagers 9.1. Der zweite Bereich 81 des deckelförmigen Elementes 21.4 ist verstärkt ausgeführt und dient auch der Aufnahme der Schraubverbindungen 22.14 beziehungsweise 22.24. In der dargestellten Ausführung weist das deckelförmige Element 21.4 keinen konstanten Innendurchmesser die über die axiale Erstreckung, im wesentlichen im zweiten und im dritten Bereich auf. Der Durchmesser verringert sich in Richtung der Gelenkgabelachse G in Einbaulage. In das deckelförmige Element 21.4 ist ein bolzenförmiges Element 90 einführbar, welches ebenfalls im wesentlichen einen konischen Querschnitt hat und der Aufweitung des deckelförmigen Elementes 21.4 wenigstens über einen Teilbereich des ersten Bereiches 80 dient.

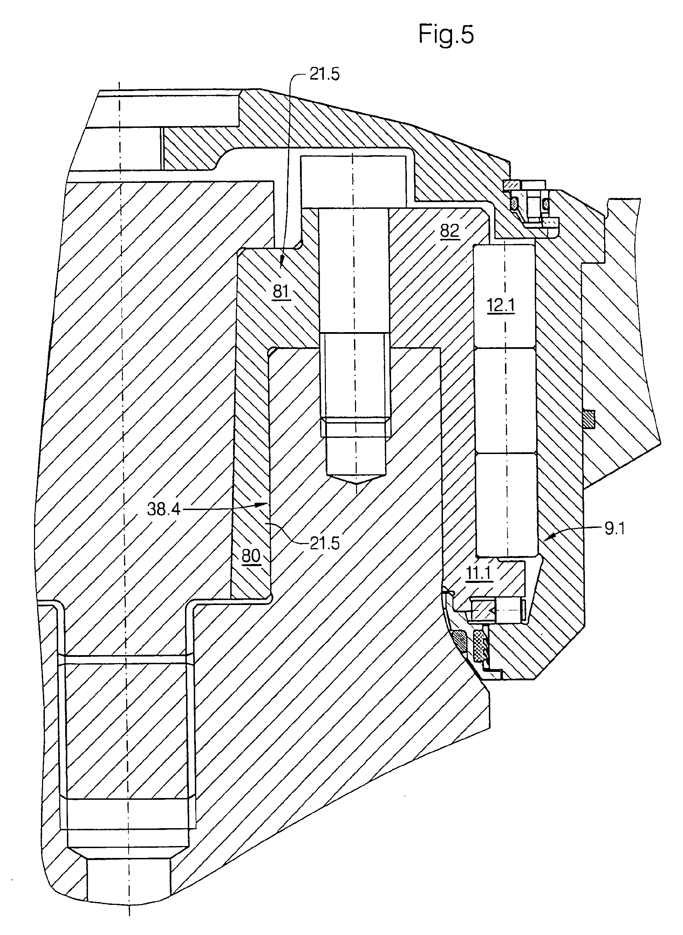

Der Innenring des Radiallagers 11.1 und der diesem zugeordnete äußere Bund, welcher vom zweiten und dritten Teilbereich des deckelförmigen Elementes, hier mit 81 und 82 bezeichnet, gebildet wird, werden von unterschiedlichen Bauteilen realisiert. Die Figur 5 verdeutlicht eine Ausführung, bei welcher das deckelförmige Element analog wie in der Figur 4 gestaltet ist, jedoch der Innenring 11.1 des Radiallagers 9.1 mit dem deckelförmigen Element 21.5 ein Bauteil bildet. Das deckelförmige Element ist hier somit in Form eines zylindrischen Elementes mit umgestülptem Rand ausgeführt.

Die Außenfläche des deckelförmigen Elementes, hier mit 91 bezeichnet, muß dabei entsprechend oberflächenbehandelt werden um als Lauffläche für die Wälzelemente 12.1 des Radiallagers 9.1 dienen zu können.

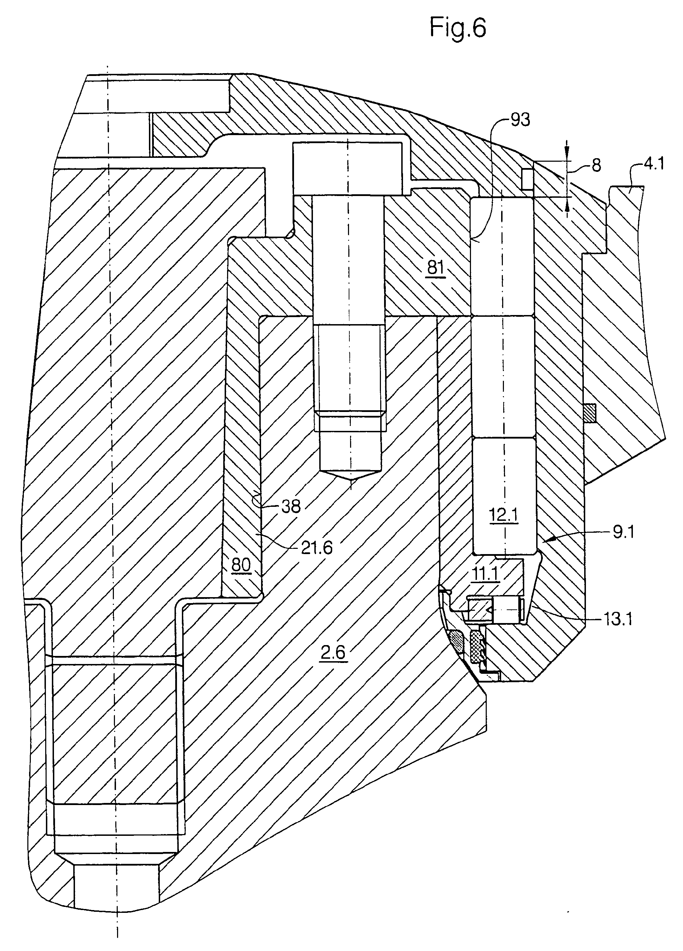

Die Figur 6 verdeutlicht eine weitere Ausführung des deckelförmigen Elementes, wobei dessen Außenumfang im zweiten Teilbereich 81, hier mit 93 bezeichnet, die Lauffläche für die Wälzelemente des Radiallagers 9.1 bildet.

## Patentansprüche

1. Gelenkanordnung für zur Übertragung von Drehmoment geeigneten Gelenkwellen;
1.1 mit wenigstens einer Gelenkgabel (4);
1.2 mit in den Gabelaugen der Gelenkgabel(n) gelagerten Zapfen (2, 3; 2.3; 2.4; 2.6) wobei
1.3 die Lageranordnung (6.1, 6.2) eines jeden Zapfens (2, 3; 2.3; 2.4; 2.6) wenigstens ein Radiallager umfaßt;
1.4 jeder Lageranordnung (6.1, 6.2) ist ein, in wenigstens zwei Teilbereiche (30; 30.1; 31.1) unterschiedlicher Abmessungen unterteilbares deckelförmiges Element (21; 21.1; 21.2; 21.3; 21.4; 21.5; 21.6) zugeordnet ist, welches im Bereich wenigstens eines ersten Teilbereiches (30; 30.1) einen axialen Anschlag für den Sitz des Innenringes (11.1; 11.2) des Radiallagers (9.1; 9.2) bildet;
1.5 mit Mitteln (39) welche das deckelförmige Element (21; 21.1; 21.2; 21.3; 21.4; 21.5; 21.6) wenigstens über einen Teilbereich des anderen zweiten Bereiches gegenüber dem Zapfen (2, 3; 2.3; 2.4; 2.6) verspannen; **dadurch gekennzeichnet, dass**
1.6 die Mittel (39) zum Verspannen einen Ölpreßverband zwischen wenigstens einem Teil des zweiten Teilbereiches (31.1) des deckelförmigen Elementes und dem Zapfen umfassen.

2. Gelenkanordnung nach Anspruch 1, **dadurch gekennzeichnet, daß** der Zapfen (2, 3; 2.3; 2.4; 2.6) in Einbaulage wenigstens eine zur Gelenkgabelachse (G) hin ausgerichtete Zapfenbohrung (38; 38.1; 38.2; 38.3; 38.4; 38.5; 38.6) an seiner Stirnseite aufweist.

3. Gelenkanordnung nach Anspruch 2, **dadurch gekennzeichnet, daß** die Zapfenbohrung (38; 38.1; 38.2; 38.3; 38.4; 38.5; 38.6) zylindrisch ausgeführt ist.

4. Gelenkanordnung nach einem der Ansprüche 2 oder 3, **dadurch gekennzeichnet, daß** die Zapfenbohrung wenigstens über einen Teilbereich seiner Erstreckung in Richtung der Gelenkgabelachse (G) wenigstens teilweise konisch ausgeführt ist.

5. Gelenkanordnung nach einem der Ansprüche 1 bis 4, **dadurch gekennzeichnet, daß** die Mittel (39) ein Betriebsmittelzufuhrsystem (40) umfassen mit wenigstens einem zentralen Versorgungskanal (41), welcher in Verteilerkanäle mündet.

6. Gelenkanordnung nach einem der Ansprüche 1 bis 5, **dadurch gekennzeichnet, daß** das deckelförmige Element (21; 21.1; 21.2; 21.3; 21.6) als Stufenscheibe mit wenigstens zwei Teilscheiben unterschiedlichen Durchmessers ausgeführt ist.

7. Gelenkanordnung nach einem der Ansprüche 1 bis 6, **dadurch gekennzeichnet, daß** das deckelförmige Element (21.4; 21.5) wenigstens zwei zylindrische Körper mit unterschiedlicher Wandstärke umfaßt, welche eine bauliche Einheit bilden.

8. Gelenkanordnung nach einem der Ansprüche 1 bis 7, **dadurch gekennzeichnet, daß** die Lageranordnung (6.1, 6.2) ein Axiallager (13.1; 13.2) umfaßt.

9. Gelenkanordnung nach Anspruch 8, **dadurch gekennzeichnet, daß** das Axiallager (13.1; 13.2) im Bereich der Zapfenwurzel angeordnet ist.

10. Gelenkanordnung nach Anspruch 9, **gekennzeichnet durch** die folgenden Merkmale:
10.1 der Innenring (11.1; 11.2) des Radiallagers (9.1; 9.2) bildet in Einbaulage in axialer Richtung eine erste äußere Lauffläche des Axiallagers (13.1; 13.2);
10.2 eine zweite innere Lauffläche des Axiallagers (13.1; 13.2) wird vom Außenring (10.1; 10.2) gebildet.

11. Gelenkanordnung nach einem der Ansprüche 9 bis 10, **dadurch gekennzeichnet, daß** das Axiallager (13.1; 13.2) gegenüber dem radial nach außen gerichteten Bund des Innenringes (11.1; 11.2) des Radiallagers (9.1; 9.2) und dem radial nach innen gerichteten Bund des Außenringes (10.1; 10.2) des Radiallagers (9.1; 9.2) derart ausgeführt ist, daß die Bunde hinsichtlich der Lage der Wälzelemente des Axiallagers (13.1; 13.2) gleiche Hebelverhältnisse aufweisen.

12. Gelenkanordnung nach Anspruch 11, **dadurch gekennzeichnet, daß** die Symmetrielinie (S) der Wälzelemente des Axiallagers (13.1; 13.2) in Einbaulage in axialer Richtung im Bereich der in axialer Richtung verlaufenden Symmetrielinie der Wälzelemente des Radiallagers (9.1; 9.2) angeordnet ist.

## Claims

1. A universal joint arrangement for universal joint shafts suitable for transferring torques;
1.1 with at least one yoke (4);
1.2 with journals (2, 3; 2.3; 2.4; 2.6) held in the fork eyes yoke(s),
1.3 with the bearing arrangement (6.1, 6.2) of each journal (2, 3; 2.3; 2.4; 2.6) comprising at least one radial bearing;
1.4 with each bearing arrangement (6.1, 6.2) being associated with a cover-like element (21; 21.1; 21.2; 21.3; 21.4; 21.5; 21.6) which can be subdivided into at least two partial areas (30; 30.1; 31.1) of different dimensions and which forms in the region of at least one first partial area (30; 30.1) an axial stop for the seat of the inside ring (11.1; 11.2) of the radial bearing (9.1; 9.2);
1.5 with means (39) which clamp the cover-like element (21; 21.1; 21.2; 21.3; 21.4; 21.5; 21.6) at least over a partial area of the other second area relative to the journal (2, 3; 2.3; 2.4; 2.6), **characterized in that**
1.6 the means (39) for clamping comprise an oil-press assembly between at least a part of the second partial area (31.1) of the cover-like element and the journal.

2. A universal joint arrangement according to claim 1, **characterized in that** the journal (2, 3; 2.3; 2.4; 2.6) comprises on its face side in the installed position at least one journal bore (38; 38.1; 38.2; 38.3; 38.4; 38.5; 38.6) which is aligned towards the yoke axis (G).

3. A universal joint arrangement according to claim 2, **characterized in that** the journal bore (38; 38.1; 38.2; 38.3; 38.4; 38.5; 38.6) is provided with a cylindrical configuration.

4. A universal joint arrangement according to one of the claims 2 or 3, **characterized in that** the journal bore is provided with an at least partial conical configuration at least over a partial section of its extension in the direction of the yoke axis (G).

5. A universal joint arrangement according to one of the claims 1 to 4, **characterized in that** the means (39) comprises an operating medium supply system (40), comprising at least one central supply channel (41) which opens into distributor channels.

6. A universal joint arrangement according to one of the claims 1 to 5, **characterized in that** the cover-like element (21; 21.1; 21.2; 21.3; 21.6) is arranged as a step pulley with at least two partial disks of different diameter.

7. A universal joint arrangement according to one of the claims 1 to 6, **characterized in that** the cover-like element (21.4; 21.5) comprises at least two cylindrical bodies with different wall thickness which form a modular unit.

8. A universal joint arrangement according to one of the claims 1 to 7, **characterized in that** the bearing arrangement (6.1, 6.2) comprises an axial bearing (13.1; 13.2).

9. A universal joint arrangement according to claim 8, **characterized in that** the axial bearing (13.1; 13.2) is arranged in the region of the journal root.

10. A universal joint arrangement according to claim 9, **characterized by** the following features:
10.1 the inner ring (11.1; 11.2) of the radial bearing (9.1; 9.2) forms in the installed position a first outer running surface of the axial bearing (13.1; 13.2) in the axial direction;
10.2 a second inner running surface of the axial bearing (13.1; 13.2) is formed by the outer ring (10.1; 10.2).

11. A universal joint arrangement according to one of the claims 9 to 10, **characterized in that** the axial bearing (13.1; 13.2) is configured in such a way relative to the radially outwardly facing collar of the inside ring (11.1; 11.2) of the radial bearing (9.1; 9.2) and the radially inwardly facing collar of the outside ring (10.1; 10.2) of the radial bearing (9.1; 9.2) that the collars have the same lever ratios with respect to the position of the roller elements of the axial bearing (13.1; 13.2).

12. A universal joint arrangement according to claim 11, **characterized in that** the line of symmetry (S) of the roller elements of the axial bearing (13.1; 13.2) is arranged in the installed position in the axial direction in the region of the line of symmetry of the roller elements of the radial bearing (9.1; 9.2) extending in the axial direction.

## Revendications

1. Articulation pour joints articulés appropriés à la transmission de couple comprenant :
1.1 au moins une fourche articulée (4) ;
1.2 des tourillons (2, 3 ; 2.3 ; 2.4 ; 2.6) disposés dans les yeux de fourche de la ou des fourches articulées ;
1.3 la disposition de palier (6.1, 6.2) de chaque tourillon (2, 3 ; 2.3 ; 2.4 ; 2.6) comprenant au moins un palier radial ;
1.4 chaque disposition de palier (6.1, 6.2) étant associée à un élément en forme de cache (21 ; 21.1 ; 21.2 ; 21.3 ; 21.4 ; 21.5 ; 21.6) divisible en au moins deux zones partielles (30 ; 30.1 ; 31.1) de dimensions différentes, ledit élément formant dans la zone d'au moins une première zone partielle (30 ; 30.1) une butée axiale pour le siège de la bague intérieure (11.1 ; 11.2) du palier radial (9.1 ; 9.2) ;
1.5 des moyens (39) qui déforment l'élément en forme de cache (21 ; 21.1 ; 21.2 ; 21.3 ; 21.4 ; 21.5 ; 21.6) au moins sur une zone partielle de l'autre deuxième zone par rapport au tourillon (2, 3 ; 2.3 ; 2.4 ; 2.6) ;
**caractérisée en ce que**
1.6 les moyens (39) de déformation comprennent un joint à huile à ajustement serré entre au moins une partie de la deuxième zone partielle (31.1) de l'élément en forme de cache et le tourillon.

2. Articulation selon la revendication 1, **caractérisée en ce que** le tourillon (2, 3 ; 2.3 ; 2.4 ; 2.6) présente en position de montage au moins un alésage de tourillon (38 ; 38.1 ; 38.2 ; 38.3 ; 38.4 ; 38.5 ; 38.6) orienté vers l'axe de la fourche articulée (G) sur sa face avant.

3. Articulation selon la revendication 2, **caractérisée en ce que** l'alésage de tourillon (38 ; 38.1 ; 38.2 ; 38.3 ; 38.4 ; 38.5 ; 38.6) a une forme cylindrique.

4. Articulation selon l'une des revendications 2 ou 3, **caractérisée en ce que** l'alésage de tourillon prend une forme au moins en partie conique sur au moins une zone partielle de son extension en direction de l'axe de la fourche articulée (G).

5. Articulation selon l'une quelconque des revendications 1 à 4, **caractérisée en ce que** les moyens (39) comprennent un système d'amenée de milieu d'entraînement (40) avec au moins un canal d'alimentation (41) central débouchant dans les canaux de distribution.

6. Articulation selon l'une quelconque des revendications 1 à 5, **caractérisée en ce que** l'élément en forme de cache (21 ; 21.1 ; 21.2 ; 21.3 ; 21.6) prend la forme d'un cône étagé avec au moins deux parties de cône de diamètres différents.

7. Articulation selon l'une quelconque des revendications 1 à 6, **caractérisée en ce que** l'élément en forme de cache (21.4 ; 21.5) comprend au moins deux corps cylindriques d'épaisseurs de paroi différentes constituant une unité de construction.

8. Articulation selon l'une quelconque des revendications 1 à 7, **caractérisée en ce que** la disposition de palier (6.1, 6.2) comprend un palier axial (13.1 ; 13.2).

9. Articulation selon la revendication 8, **caractérisée en ce que** le palier axial (13.1 ; 13.2) est disposé dans la zone de la racine du tourillon.

10. Articulation selon la revendication 9, **caractérisée par** les caractéristiques suivantes :
10.1 la bague intérieure (11.1 ; 11.2) du palier radial (9.1 ; 9.2) forme dans la position de montage dans la direction axiale une première surface de roulement extérieure du palier axial (13.1 ; 13.2) ;
10.2 une deuxième surface de roulement intérieure du palier axial (13.1 ; 13.2) est formée par la bague extérieure (10.1 ; 10.2).

11. Articulation selon l'une des revendications 9 ou 10, **caractérisée en ce que** le palier axial (13.1 ; 13.2), par rapport à l'attache orientée vers l'extérieur dans le plan radial de la bague intérieure (11.1 ; 11.2) du palier radial (9.1 ; 9.2) et à l'attache orientée vers l'intérieur dans le plan radial de la bague extérieure (10.1 ; 10.2) du palier radial (9.1 ; 9.2), est réalisé de telle sorte que les attaches présentent les mêmes rapports de levier par rapport à la position des éléments de laminage du palier axial (13.1 ; 13.2).

12. Articulation selon la revendication 11, **caractérisée en ce que** la ligne de symétrie (S) des éléments de laminage du palier axial (13.1 ; 13.2) est disposée dans la position de montage dans la direction axiale dans la zone de la ligne de symétrie s'étendant dans la direction axiale des éléments de laminage du palier radial (9.1 ; 9.2).
